# FASCICULE DE BREVET EUROPEEN

(11) **EP 4 070 699 B1**
(45) Date de publication et mention de la délivrance du brevet: **18.10.2023**
(21) Numéro de dépôt: 22164265.5
(22) Date de dépôt: 25.03.2022
(51) Int. Cl.: A47J 31/44

(54) **MACHINE DE PRÉPARATION ET/OU DE DISTRIBUTION D'ALIMENTS LIQUIDES OU PÂTEUX MUNIE D'UNE TÊTE MOBILE ET D'UN REPOSE-TASSE MOBILES CONJOINTEMENT**
MASCHINE ZUR ZUBEREITUNG UND/ODER AUSGABE VON FLÜSSIGEN ODER PASTÖSEN LEBENSMITTELN MIT EINEM BEWEGLICHEN KOPF UND EINER TASSENHALTERUNG, DIE ZUSAMMEN BEWEGLICH SIND
MACHINE FOR PREPARING AND/OR DISTRIBUTING LIQUID OR PASTY FOODSTUFFS PROVIDED WITH BOTH A MOBILE HEAD AND A MOBILE CUP SHELF

(30) Priorité: 02.04.2021 FR 2103455
(43) Date de publication de la demande: 12.10.2022
(73) Titulaire: SEB S.A., 69130 Ecully (FR)
(72) Inventeur: MORIN, Gilles, 69290 POLLIONNAY (FR); RUSSIER, Fabien, 69110 SAINTE-FOY-LES-LYON (FR)
(74) Mandataire: SEB Développement

(56) Documents cités:
- EP-A1- 3 574 809
- US-A1- 2006 065 126
- US-A1- 2007 017 376

## Description

### Domaine technique

La présente invention concerne une machine de préparation et/ou de distribution d'aliments liquides ou pâteux qui comporte un bâti, une tête mobile par rapport au bâti et un repose-récipient mobile par rapport au bâti, le repose-récipient étant agencé sous la tête mobile et destiné à recevoir un récipient de réception de l'aliment, par exemple une tasse, un mug ou un bol.

Plus précisément, l'invention vise à développer une telle machine qui comprend un dispositif de réglage de la position de la tête mobile par rapport au repose-récipient afin de pouvoir ajuster ladite position de la tête vis-à-vis du repose-récipient, notamment en fonction de la taille du récipient posé sur le repose-récipient.

Par aliments liquides ou pâteux, il est sous-entendu des aliments liquides ou pâteux en début de préparation et/ou distribution, mais pouvant être solide en fin de préparation, par exemple des oeufs.

Il peut s'agir d'une machine à café qui comporte une tête mobile munie d'un dispositif de moussage, lequel comporte un agitateur rotatif et un conduit d'amenée d'eau chaude et/ou de vapeur. Il peut s'agir aussi d'une tête mobile munie d'une buse de distribution de café, en complément ou en substitution du dispositif de moussage. Il peut également s'agir, d'une machine de cuisson des aliments directement d'un récipient afin de préparer des oeufs brouillés, du porridge, de la semoule de riz, voire d'autres préparations culinaires appropriées. Ces exemples ne sont évidemment pas limitatifs de la machine selon l'invention.

### Etat de la technique

De telles machines ont déjà été développées par l'Homme du métier, la demanderesse ayant connaissance des antériorités suivantes en rapport avec l'objet de l'invention : CH315837A ; EP1639926B1 ; EP1745726B1 ; EP2191753B1 ; WO2018096137A2 ; EP3574809A1.

Les titres CH315837A et EP1639926B1 prévoient un dispositif de réglage permettant de déplacer en hauteur le repose-récipient par rapport au bâti de la machine afin de régler sa position par rapport à la tête qui est fixe sur le bâti de la machine. A l'inverse, les titres EP1745726B1, EP2191753B1 et WO2018096137A2 prévoient un dispositif de réglage permettant de déplacer en hauteur la tête par rapport au bâti de la machine afin de régler sa position par rapport au repose-récipient qui est fixe sur le bâti de la machine.

Dans la demande de brevet EP3574809A1, déposée par la demanderesse, la machine comprend un premier dispositif de réglage permettant de déplacer en hauteur le repose-récipient par rapport au bâti afin de pouvoir rapprocher le récipient posé sur le repose-récipient, d'une première tête de distribution de café. Cette machine comprend en outre un second dispositif de réglage permettant de déplacer en hauteur une seconde tête comportant un dispositif de moussage qui peut distribuer de l'eau chaude et/ou de la vapeur et qui est muni d'un outil rotatif, le déplacement en hauteur de la seconde tête permettant de plonger l'outil rotatif dans le récipient posé sur le repose-récipient placé en position basse.

### Exposé de l'invention

L'invention a pour objectif de mettre en oeuvre une machine qui comprend un repose-récipient et une tête qui sont tous les deux mobiles en hauteur sur le bâti afin de permettre leur rapprochement et dont les déplacements sont optimisés. Un autre objectif est de faciliter les manipulations et de gagner du temps durant la manoeuvre du repose-tête ou de la tête consistant à les rapprocher ou à les éloigner.

Ces objectifs sont atteints par l'invention qui met en oeuvre une machine de préparation et/ou de distribution d'aliments liquides ou pâteux, appelée dans la suite de la description machine, sauf indication dans le texte. Par aliments liquides ou pâteux, il faut comprendre des aliments qui sont liquides ou pâteux en début de préparation et/ou distribution mais qui peuvent rester liquide ou pâteux ou, à l'inverse, devenir solide en fin de préparation, par exemple des oeufs. Il faut également comprendre que l'aliment peut être distribué par la machine, mais il peut être aussi placé directement dans le récipient afin d'effectuer la préparation, voire un ou plusieurs ingrédients peuvent être distribués par la machine et un ou plusieurs autres ingrédients peuvent être placés dans le récipient avant la préparation, lesdits ingrédients composant ledit aliment une fois mélangés ensemble dans un récipient.

Selon l'invention, la machine comporte un bâti, une tête mobile par rapport au bâti et un repose-récipient mobile par rapport au bâti, ledit repose-récipient étant agencé sous la tête mobile et étant destiné à recevoir un récipient de réception de l'aliment. Le récipient peut être une tasse, un mug ou un bol, par exemple. En outre, la machine comporte un dispositif de liaison du déplacement de la tête et du repose-récipient, la tête et le repose-récipient étant mobiles conjointement dans des sens opposés entre une position éloignée d'attente et une position rapprochée de travail. En d'autres termes, le dispositif de liaison du déplacement de la tête et du repose-récipient est configuré pour assurer des déplacements concomitants en hauteur de la tête et du repose-récipient selon deux trajectoires opposées afin de les écarter dans une position éloignée d'attente ou, inversement, de les rapprocher dans une position rapprochée de travail, c'est-à-dire de préparation et/ou de distribution.

Ainsi, selon l'invention, le déplacement de la tête vers le bas afin de la rapprocher du récipient posé sur le repose-récipient engendre simultanément le déplacement vers le haut du repose-récipient pour le rapprocher également de ladite tête, ce qui limite les courses de déplacement en hauteur de la tête et aussi du repose-récipient et permet de réduire le temps de rapprochement de la tête vis-à-vis du récipient placé sur le repose-récipient, afin d'effectuer la préparation et/ou la distribution. Il en est de même, inversement, lors du déplacement vers le haut du repose-récipient, celui-ci engendrant simultanément le déplacement de la tête vers le bas pour la rapprocher du repose-récipient. Lorsque les déplacements de la tête et du repose-récipient se font manuellement sur la machine, l'utilisateur n'a donc qu'à manipuler l'un ou l'autre de la tête ou du repose-récipient pour effectuer leur rapprochement concomitant en un temps réduit, de préférence de moitié.

Selon la machine objet de l'invention, la tête et le repose-récipient sont mobiles par rapport au bâti en translation le long d'un axe vertical. Selon une variante, la tête et le repose-récipient peuvent être mobiles par rapport au bâti en translation selon des axes verticaux distincts, voire selon un même axe ou des axes distincts légèrement inclinés par rapport à la verticale. Il est également possible de prévoir d'autres degrés de mobilité de la tête et/ou du repose-récipient par rapport au bâti ; par exemple, la tête peut pivoter en complément selon un axe vertical pour permettre son décalage sur le côté par rapport au repose-récipient, par exemple pour faciliter le démontage et le nettoyage. De préférence, la tête et le repose-récipient se déplacent sur au moins une colonne commune. Cette colonne commune définit un axe vertical de translation de la tête et du récipient. Bien entendu, d'autres mises en oeuvre de liaison glissière de la tête et du repose-récipient sur le bâti peuvent être envisagées dans le cadre de l'invention.

Selon une réalisation de la machine, pour laquelle la tête et le repose-récipient sont mobiles par rapport au bâti en translation le long d'un axe vertical, le dispositif de liaison du déplacement de la tête et du repose-récipient comporte une première crémaillère assujettie au repose-récipient, une deuxième crémaillère assujettie à la tête et un pignon mobile autour d'un axe de rotation vis-à-vis du bâti. Le pignon coopère avec la première crémaillère et la deuxième crémaillère de telle façon que celles-ci sont réglables verticalement en sens opposé l'une par rapport à l'autre. Selon cette réalisation, il est possible de prévoir un dispositif de liaison du déplacement de la tête et du repose-récipient entièrement manuel, la manipulation réalisée par l'utilisateur de l'un ou l'autre de la tête ou du repose-récipient entraînant simultanément les déplacements de la tête et du repose-récipient en directions opposées pour les rapprocher ou les éloigner.

Il est toutefois possible de prévoir une variante automatisée selon laquelle le dispositif de liaison du déplacement de la tête et du repose-récipient comporte un moteur d'entrainement du pignon, l'actionnement du moteur assurant les déplacements simultanés de la tête et du repose-récipient. Ces mises en oeuvre permettent de déplacer avec des vitesses identiques, la tête et le repose-récipient. Il serait possible de prévoir des systèmes d'engrenage différents avec les première et seconde crémaillères afin de déplacer en sens opposés à des vitesses différentes, la tête et le repose-récipient.

Selon une réalisation non limitative de la machine, la tête comporte un système de traitement de l'aliment et/ou un système de distribution de l'aliment.

Selon une réalisation non limitative du système de traitement, celui-ci comporte un outil rotatif destiné à agiter une préparation contenue dans le récipient et /ou un conduit d'amenée d'eau chaude et/ou de vapeur destiné à être positionné dans l'aliment en position rapprochée de travail. En outre, la machine comporte un générateur d'eau chaude et/ou de vapeur pour alimenter ledit conduit d'amenée d'eau chaude et/ou de vapeur.

De préférence, le conduit d'acheminement d'eau chaude et/ou de vapeur est rotatif, l'outil rotatif étant agencé à proximité d'une extrémité libre du conduit d'acheminement d'eau chaude et/ou de vapeur. Cela simplifie la conception de la machine. Bien entendu, il serait possible de prévoir une variante de machine avec un outil rotatif distinct du conduit d'acheminement d'eau chaude et/ou de vapeur.

Selon une réalisation non limitative du système de traitement, celui-ci comporte un point bas, ledit point bas étant agencé par rapport au repose-récipient, en position rapprochée de travail, à une distance D1 inférieure ou égale à cinq millimètres (D1≤5mm). Cela permet de traiter convenablement l'aliment dans le fond du récipient, par exemple lorsqu'il s'agit d'agiter l'aliment dans ledit récipient au moyen d'un outil rotatif. Cela permet aussi de traiter une petite quantité d'aliment placée dans un récipient.

Selon une réalisation non limitative du système de distribution de l'aliment, celui-ci comporte au moins une buse de distribution, notamment de café et/ou de lait, qui comporte une extrémité libre, ladite extrémité libre étant agencée au niveau d'un bord supérieur du récipient en position rapprochée de travail. Cela permet notamment d'éviter des éclaboussures lors du déversement du café et/ou du lait dans le récipient.

### Brève description des figures

Les caractéristiques et avantages de l'invention apparaîtront à la lecture de la description suivante s'appuyant sur des figures, parmi lesquelles :
La figure 1 illustre une vue d'ensemble tridimensionnelle d'un exemple de machine selon l'invention, la tête et le repose-récipient étant écartés l'un de l'autre ;
La figure 2 illustre de côté la machine de la figure 1, la tête et le repose-récipient étant écartés l'un de l'autre ;
La figure 3 illustre de face la machine de la figure 1, la tête et le repose-récipient étant écartés l'un de l'autre ;
La figure 4 est une vue en plan de derrière illustrant une réalisation préférentielle du dispositif de liaison du déplacement de la tête et du repose-récipient agencé à l'intérieur de la machine des figures 1 à 3 ;
La figure 5 est une autre vue dudit dispositif illustré en figure 4 ;
La figure 6 illustre une vue d'ensemble tridimensionnelle de la façade de la machine des figures 1 à 3, la tête et le repose-récipient étant rapprochés l'un de l'autre à un point bas ;
La figure 7 illustre une vue en coupe d'un premier exemple de tête mobile sur la machine, ladite tête comportant un conduit d'acheminement d'eau chaude et/ou de vapeur et un outil rotatif ;
La figure 8 illustre un second exemple de tête mobile sur la machine, ladite tête comportant une buse de distribution de café ;
La figure 9 illustre un troisième exemple de tête mobile sur la machine, ladite tête comportant une buse de distribution de café et un conduit d'acheminement d'eau chaude et/ou de vapeur auquel est assujetti un outil rotatif, la buse et le conduit étant placés l'un derrière l'autre sur la machine ;
La figure 10 illustre en vue de dessous un quatrième exemple de tête mobile sur la machine s'apparentant à la figure 9, ladite tête comportant une buse de distribution de café et un conduit d'acheminement d'eau chaude et/ou de vapeur auquel est assujetti un outil rotatif, la buse et le conduit étant placés l'un à côté de l'autre sur la machine.

### Description détaillée de l'invention

Dans la suite de la description, sauf indication, le terme « machine » est utilisé pour désigner la machine de préparation et/ou de distribution d'aliments liquides ou pâteux, objet de l'invention.

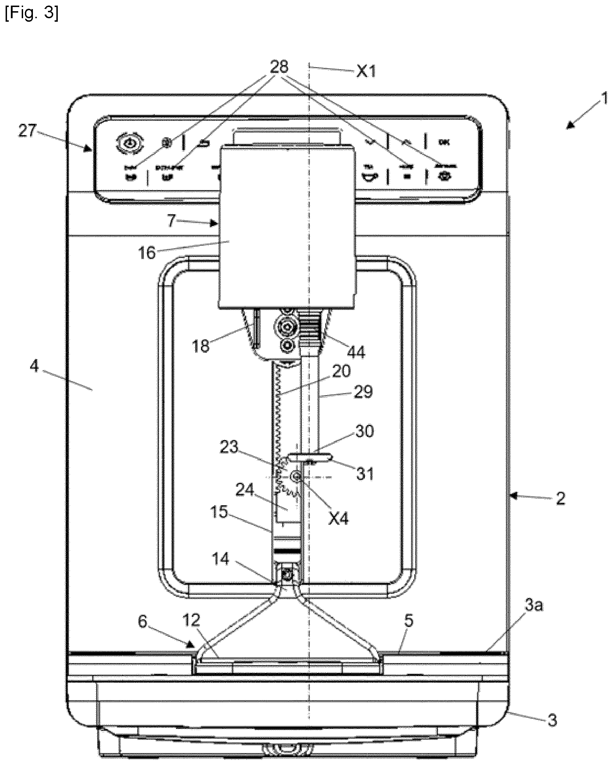

Les termes « supérieur », « inférieur », « haut », « bas », « avant », « arrière », « latéral », « vertical », « horizontal », etc. qui pourraient être utilisés dans la présente description, le seront en considération de la position normale des éléments de la machine placée dans une configuration fonctionnelle sur un plan de support horizontal, la machine étant placée face à l'utilisateur, tel qu'illustré sur la figure 3.

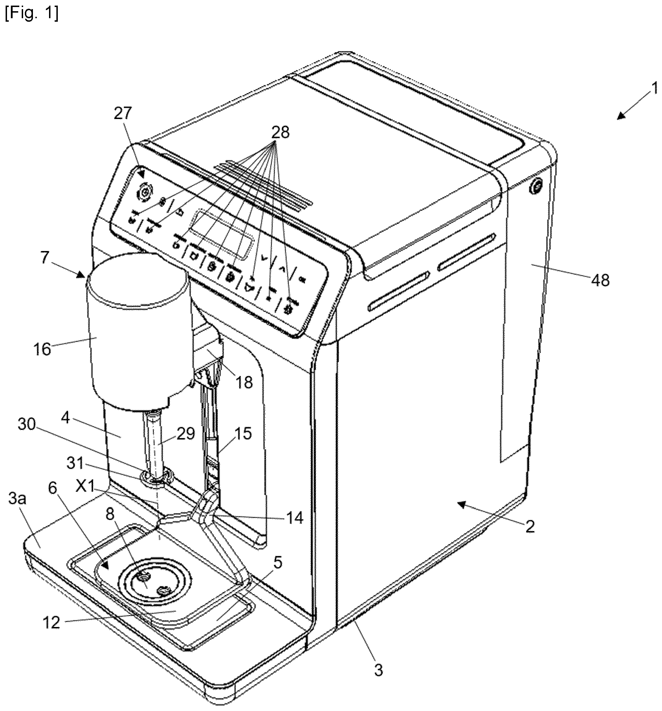

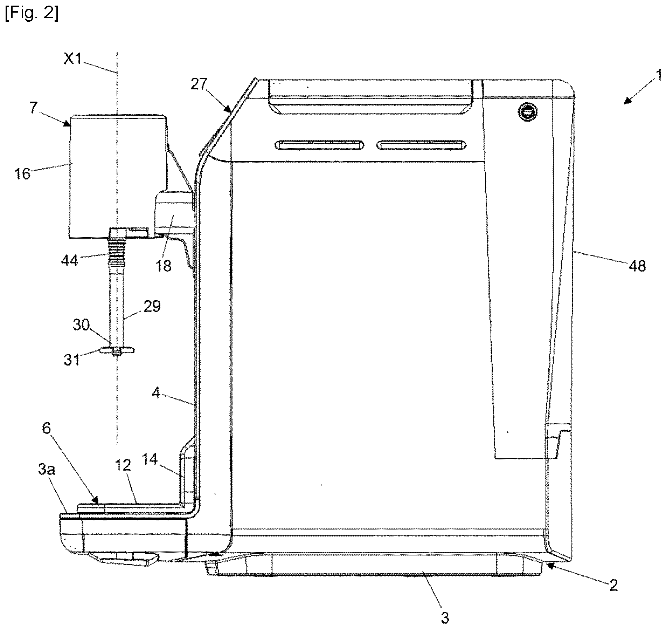

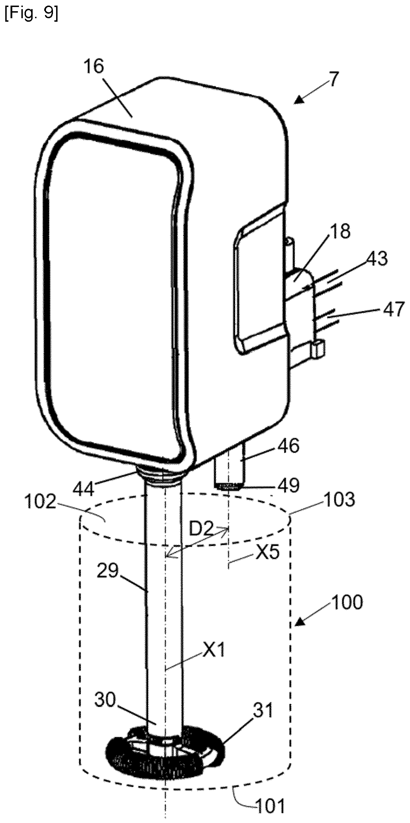

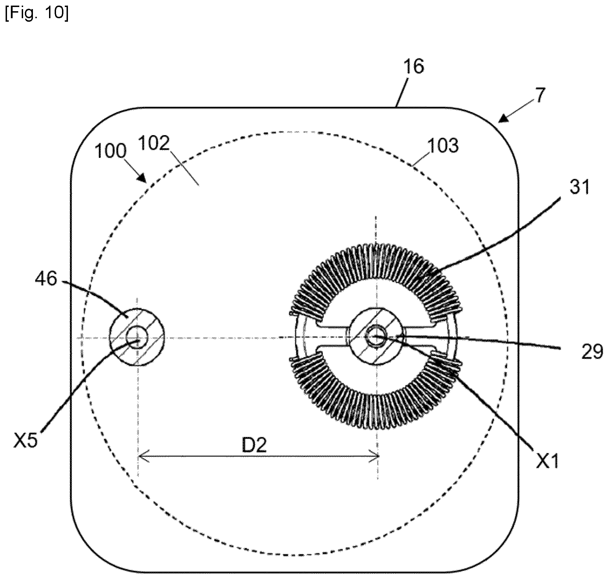

En regard des figures 1 à 3 et 6, la machine 1 comprend un bâti 2 muni d'un socle 3 et d'une façade 3. La partie avant 3a du socle 3 s'étendant vers l'avant par rapport à la façade 4 et comprend par de préférence un bac 5 amovible pour la collecte d'un liquide pouvant tomber hors d'un récipient 100 (illustré figures 9 et 10), telle qu'une tasse, un mug ou un bol dans lequel sera placé l'aliment préparé et/ou distribué par la machine 1. La machine 1 comprend également un repose-récipient 6 qui est placé au-dessus du bac 5 et une tête 7 qui est placée au-dessus du repose-récipient 6. Le repose-récipient 6 comprend de préférence une coupelle 8 amovible qui reçoit le récipient 100 lors de la préparation et/ou de la distribution de l'aliment. La coupelle 8 permet également la collecte d'un liquide tombant hors du récipient 100, son caractère amovible facilitant son nettoyage.

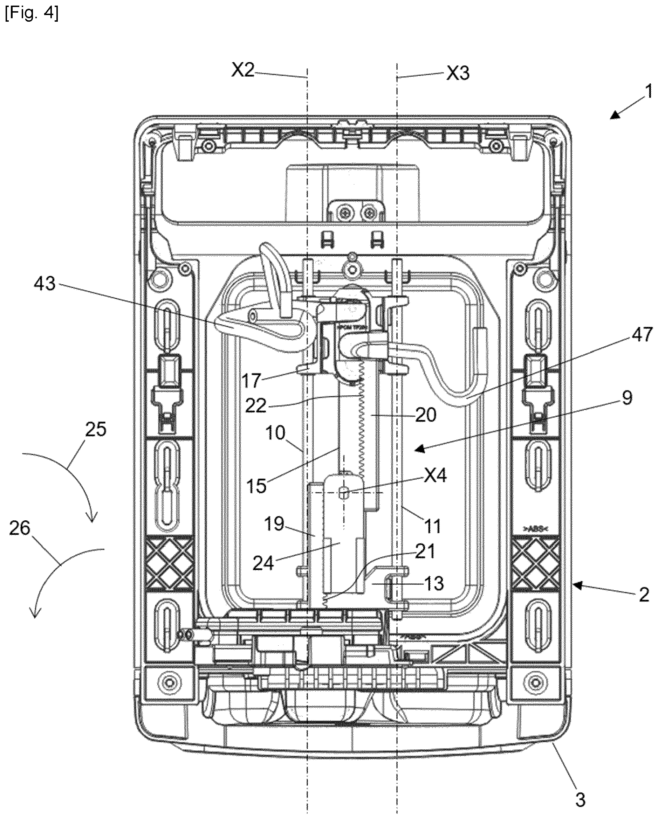

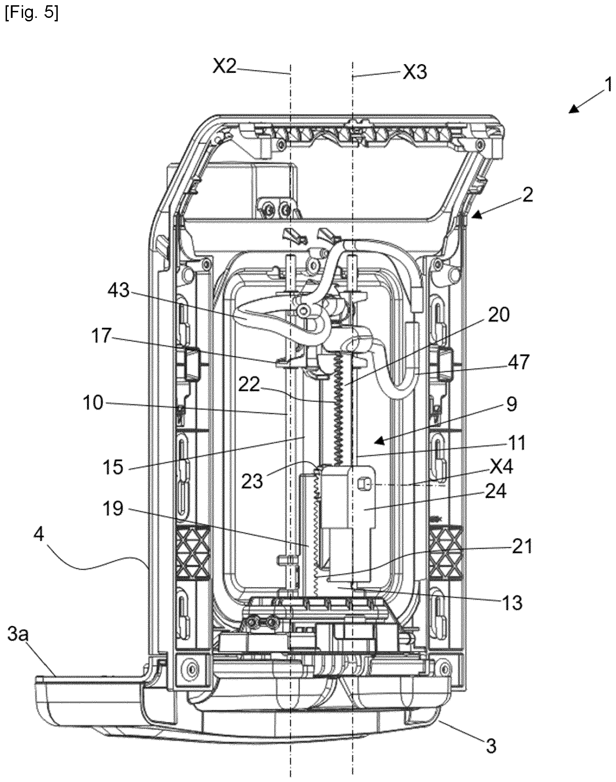

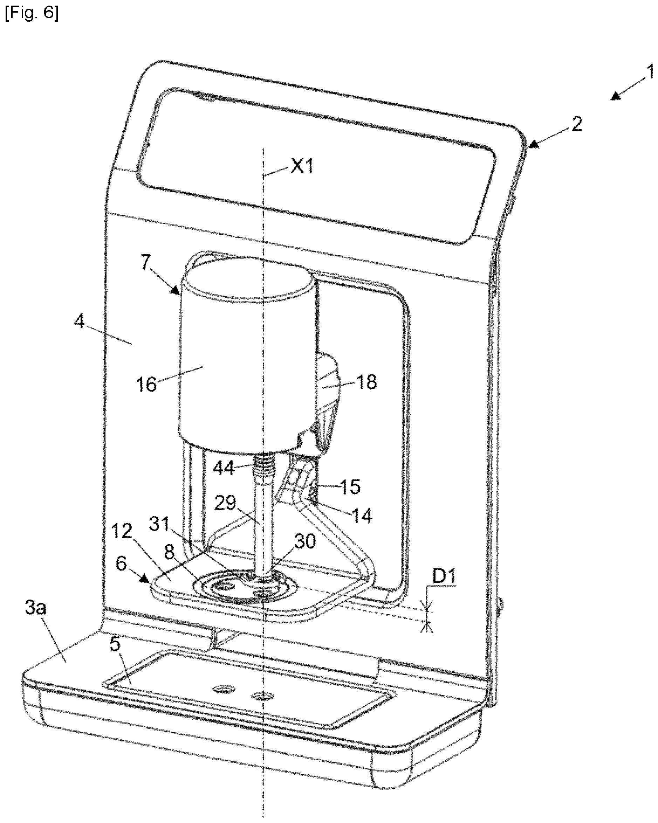

Le repose-récipient 6 et la tête 7 sont tous les deux mobiles en translation selon un axe vertical X1 et placés l'un en-dessous de l'autre, ce qui permet de les écarter l'un de l'autre dans une position éloignée illustrée sur les figure 1 à 3 où la machine 1 est en attente d'une préparation et/ou d'une distribution et, inversement, de les rapprocher l'un de l'autre dans une position rapprochée de travail où la machine 1 permet de préparer et/ou de distribuer l'aliment dans le récipient 100 placé sur la coupelle 8 du repose-récipient 6. Avantageusement, la machine 1 est conçue pour que le repose-récipient 6 et la tête 7 soient mobiles conjointement dans des sens opposés entre la position éloignée d'attente (figures 1 à 3) et la position rapprochée de travail (figure 6). Pour cela, la machine 1 comprend un dispositif 9 de liaison du déplacement de la tête 7 et du repose-récipient 6, illustré notamment sur les figures 4 et 5.

En regard des figures 4 et 5, ledit dispositif 9 comprend deux colonnes 10, 11 qui ont chacune une forme de tige cylindrique s'étendant selon deux axes verticaux X2, X3. Le repose-récipient 6 comprend une platine 12 disposée à l'extérieur, en avant de la façade 4 du bâti 2, un premier coulisseau 13 agencé à l'intérieur du bâti 3 et un premier bras 14 reliant la platine 12 au premier coulisseau 13 en passant au travers d'une lumière verticale 15 agencée sur la façade 4, comme l'illustrent les figures 1 à 3 et 6. Le premier coulisseau 13 est monté en liaison glissière vis-à-vis des deux colonnes 10, 11, ce qui permet la translation du repose-récipient 6 vers le haut et le bas selon l'axe X1. De la même manière, la tête 7 comprend un corps 16 disposé à l'extérieur en avant de la façade 15 du bâti 2, au-dessus de la platine 12. La tête 7 comprend un second coulisseau 17 agencé à l'intérieur du bâti 3 et un second bras 18 reliant le corps 16 au second coulisseau 17 en passant au travers de la lumière verticale 15, comme l'illustrent les figures 1 à 3 et 6. Le second coulisseau 17 est monté en liaison glissière vis-à-vis des deux colonnes 10, 11, ce qui permet la translation de la tête 7 vers le haut et le bas selon l'axe X1.

Tel que l'illustrent les figures 4 et 5, une première crémaillère 19 est agencée verticalement et fixée au premier coulisseau 13, et une seconde crémaillère 20 est agencée verticalement et fixée au second coulisseau 17. Les dents 21 de la première crémaillère 19 et les dents 22 de la seconde crémaillère 20 sont disposées en vis-à-vis, un pignon 23 étant monté en rotation selon un axe X4 vis-à-vis d'une pièce de support 24 fixe à l'intérieur du bâti 2, ledit pignon 23 engrenant avec les première et seconde crémaillères 19, 20. Ainsi, la rotation du pignon 23 selon le sens de flèche 25 permet de faire monter verticalement le repose-récipient 6 et, concomitamment, de faire descendre verticalement la tête 7, ce qui assure le rapprochement conjoint du repose-récipient 6 et de la tête 7. Inversement, la rotation du pignon 23 dans le sens opposé, selon la flèche 26, permet de faire descendre verticalement le repose-récipient 6 et, concomitamment, de faire monter verticalement la tête 7, ce qui assure l'éloignement conjoint du repose-récipient 6 et de la tête 7.

Selon cette conception précitée et illustrée en regard notamment des figures 4 et 5, le mécanisme du dispositif 9 fonctionne manuellement, c'est-à-dire qu'il nécessite un actionnement manuel de la part de l'utilisateur, soit du repose-récipient 6, soit de la tête 7. En effet, l'utilisateur peut soit tirer vers le haut ou vers le bas sur la platine 12 du repose-récipient 6 pour le monter ou le descendre, selon sa position initiale, ce qui engendre le déplacement du premier coulisseau 13 et de la première crémaillère 19. Le déplacement de la première crémaillère 19 entraîne la rotation du pignon 23 dans le sens de la flèche 25 ou de l'autre flèche 26, selon la montée ou la descente du repose-récipient 6, ce qui entraîne donc simultanément le déplacement de la seconde crémaillère 20 en sens inverse de la première crémaillère 19 et, ainsi, le déplacement du second coulisseau 17 et donc de la tête 7 en mouvement inverse du repose-récipient 6, pour leur rapprochement ou leur éloignement conjoint. Le principe est identique si l'utilisateur actionne la tête 7 au lieu du repose-récipient 6, en saisissant le corps 16 de ladite tête 7. Des variantes de la machine 1 peuvent être envisagées en automatisant les déplacements du repose-récipient 6 et de la tête 7, par l'ajout notamment d'un moteur (non illustré) entre la pièce de support 24 et le pignon 23 pour entrainer en rotation le pignon 23 selon l'axe X4, dans le sens de la flèche 25 ou de la flèche 26, l'actionnement du moteur étant géré par une carte de commande électronique (non illustrée) en fonction du programme de préparation et/ou de distribution lancé sur la machine 1 grâce à un clavier de sélection 27 agencé en partie supérieure 4a de la façade 4, le clavier de sélection 27 comprenant notamment plusieurs boutons 28 de sélection de programmes de préparation et/ou de distribution.

La tête 7 comprend un conduit 29 d'acheminement d'eau chaude et/ou de vapeur qui s'étend verticalement selon l'axe X1 en-dessous du corps 16, jusqu'à une extrémité libre inférieure 30 au niveau de laquelle est monté un outil rotatif 31 tournant autour de l'axe X1 avec le conduit 29. Lorsque le repose-récipient 6 et la tête 7 sont en position rapprochée de travail, l'outil rotatif 31 est placé à un point bas, à proximité de la coupelle 8 sur le repose-récipient 6, à une distance D1 de la platine 12 du repose-récipient 6. Cette distance D1 est de préférence inférieure ou égale à cinq millimètres (D1≤5mm), pour assurer un traitement efficace de l'aliment placé dans le fond 101 du récipient 100 posé sur la coupelle 8, dans la position rapprochée de travail où l'outil rotatif 31 est à proximité du fond 101 du récipient 100. Cela permet aussi avantageusement de traiter efficacement une petite quantité d'aliment placée dans le récipient 100.

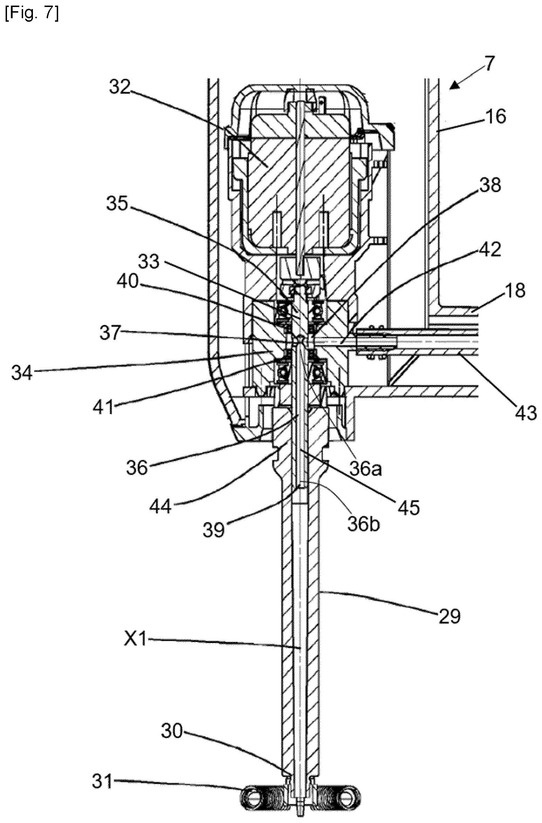

En regard de la figure 7, la tête 7 reçoit un moteur électrique 32 qui entraîne en rotation selon l'axe X1 un arbre d'entrainement 33 qui s'étend selon cet axe X1 et traverse une boite à vapeur 34. L'arbre d'entraînement 33 comprend un tronçon supérieur plein 35 et un tronçon inférieur creux 36. Le tronçon inférieur creux 36 présente à son extrémité supérieure 36a des orifices 37 qui débouchent dans une chambre 38 définie à l'intérieur de la boîte à vapeur 34, ledit tronçon inférieur creux 36 présentant à son extrémité inférieure 36b un orifice de sortie 39 qui débouche à l'extérieur, en-dessous du corps 16 de la tête 7. L'arbre d'entrainement 33 est monté en liaison pivot d'axe X1 vis-à-vis de la boîte à vapeur 34 par l'intermédiaire de deux paliers de guidage étanches 40, 41 disposés de part et d'autre de la chambre 38, ce qui assure une étanchéité à ladite chambre 38. Un canal radial 42 est agencé sur la boîte à vapeur 34 et débouche dans la chambre 38, ce canal radial 42 étant raccordé à un premier tuyau de distribution 43 qui passe dans le second bras 18 de la tête 7 et se prolonge à l'intérieur du bâti 2. Le premier tuyau de distribution 43 est souple, ce qui permet de déplacer librement en hauteur la tête 7 vis-à-vis du bâti 2.

Le conduit 29 qui s'étend le long de l'axe X1 comporte une portion d'extrémité supérieure 44 qui forme un embout femelle recevant par emboîtement en force, c'est-à-dire avec un léger serrage, une portion d'extrémité inférieure 45 du tronçon inférieur creux 36 qui forme un embout mâle. Ainsi, le conduit 29 est accouplé avec l'arbre d'entraînement 33, ce qui permet d'entraîner la rotation du conduit 29 et de l'outil rotatif 31 selon l'axe X1, lors de l'activation du moteur électrique 32. En outre, cet accouplement par emboîtement du conduit 29 sur le tronçon inférieur creux 36 permet de monter de manière amovible le conduit 29 et l'outil rotatif 31 sur le corps 16 de la tête 7. Bien entendu, il est possible d'envisager d"autres types d'assemblages démontables entre le conduit 29 et le tronçon inférieur creux 36, par exemple un assemblage à baïonnettes.

La machine 1 comprend un générateur d'eau chaude et/ou de vapeur (non illustré sur les figures) qui alimente en eau chaude et/ou en vapeur le premier tuyau de distribution 43, l'eau chaude et/ou la vapeur étant acheminées jusqu'en sortie du conduit 29, c'est-à-dire son extrémité libre inférieure 30 où se situe l'outil rotatif 31, en passant par le canal radial 42, la chambre 38, le tronçon inférieur creux 36 et ledit conduit 29. Le caractère amovible du conduit 29 vis-à-vis du tronçon inférieur creux 36 permet en outre de retirer ledit conduit 29 (et l'outil rotatif 31) afin de permettre le déversement d'eau chaude et/ou de vapeur dans un récipient 100, directement en positionnant l'extrémité inférieure 36b du tronçon inférieur creux 36 au-dessus de l'ouverture supérieure 102 du récipient 100 placé sur le repose-récipient 6, c'est-à-dire en rapprochant la tête 7 et le repose-récipient 6 jusqu'à ce que ladite extrémité inférieure 36b soit à hauteur du bord supérieur 103 du récipient 100.

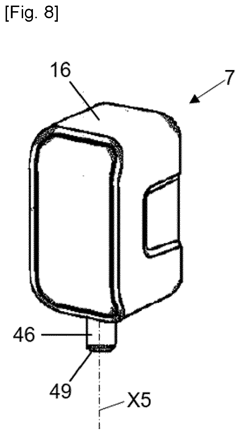

Sur la variante de la figure 8, la tête 7 comprend une buse 46 de distribution de café s'étendant selon un axe X5 vertical (équivalent à l'axe X1) selon lequel translate verticalement ladite tête 7 et le repose-récipient 6. Cette buse 46 est raccordée à un second tuyau de distribution 47 qui est alimenté en boisson de café par un dispositif d'infusion (non représentés sur les figures) produisant ledit café à partir de mouture de café et d'eau chaude. La machine 1 comporte un réservoir 48 formant une alimentation en eau froide, le dispositif d'infusion étant alimenté en eau chaude par une chaudière (non représentée sur les figures). Le dispositif d'infusion peut comporter une chambre d'infusion destinée à recevoir de la mouture provenant d'un broyeur à café intégré au dispositif d'infusion ou une capsule de café placé par l'utilisateur dans la chambre. Dans le cas où la chambre d'infusion est destinée à recevoir une capsule, la construction de la machine 1 peut être très compacte. Ces principes de dispositif d'infusion sont connus sur les machines de préparation et/ou de distribution disponibles actuellement sur le marché. La buse 46 s'étend en-dessous du corps 16 de la tête 7 et comprend une extrémité libre 49 qui vient se positionner au-dessus de l'ouverture supérieure 102 du récipient 100, au niveau de son bord supérieur 103, lorsque la tête 7 et le repose-récipient 6 sont rapprochés en position de travail, cette position de travail pouvant dépendre de la hauteur du récipient 100 placé sur le repose-récipient 6. Le second tuyau de distribution 47 est souple, ce qui permet de déplacer librement en hauteur la tête 7 vis-à-vis du bâti 2.

Sur les variantes des figures 9 et 10, la tête 7 combine les modes de réalisation des figures 7 et 8, celle-ci comportant à la fois un conduit 29 à l'extrémité libre inférieure 30 duquel est assujetti l'outil rotatif 31 et une buse 46 de distribution de café, le conduit 29 étant alimenté en eau chaude et/ou en vapeur par le premier tuyau de distribution 43 et la buse 46 par le second tuyau de distribution 47, le conduit 29 s'étendant selon l'axe X1 et la buse 46 s'étendant selon un axe X5, les deux axes X1 et X5 étant verticaux. Sur la variante de la figure 9, la buse 46 est placée derrière le conduit 29, c'est-à-dire entre le conduit 29 et la façade 4, les deux axes X1 et X5 étant dans un même plan vertical perpendiculaire au plan de la façade 4. Tandis que sur la variante de la figure 10, la busé 46 est placée à côté du conduit 29, c'est-à-dire que les deux axes X1 et X5 sont dans un même plan vertical parallèle au plan de la façade 4. L'axe X1 du conduit 29 et l'axe X5 de la buse 46 sont espacés l'un de l'autre d'une distance D2 qui de préférence n'excède pas six centimètres (D2≤6cm), de préférence quatre centimètres (D2≤4cm), afin que la buse 46 et le conduit 29 avec l'outil rotatif 31, voire la buse 46 et la portion d'extrémité inférieure 45 du tronçon inférieur creux 36 lorsque le conduit 29 est démonté de ladite portion d'extrémité inférieure 45, puissent être placés simultanément au-dessus de l'ouverture supérieure 102 d'un récipient 50. Dans la position de travail, au point bas, lorsque l'outil de travail 1 est plongé à proximité du fond 101 du récipient 100, l'extrémité inférieure 49 de la buse 46 se situe au niveau du bord supérieur 103 du récipient 100, plus ou moins à la même hauteur. L'extrémité inférieure 36b du tronçon inférieur creux 36 et l'extrémité libre 49 de la buse 46 sont placées à une même hauteur sous le corps 16 de la tête 7, ou sensiblement à une même hauteur, de sorte à placer ces deux extrémités inférieures 36b, 49 au niveau du bord supérieur 103 du récipient 100 en position de travail, lorsque le conduit 29 et l'outil de travail 31 sont préalablement retirés, dans le cas de certaines recettes ou préparations ne nécessitant pas leur usage.

La machine 1 comprend une carte de commande électronique (non illustrée) qui permet de gérer différents cycles de préparation des boissons en fonction de la sélection effectuée sur le clavier de sélection 27. Les boutons 28 de sélection de programmes de préparation et/ou de distribution permettent, chacun, de lancer une préparation à base de lait et/ou de café à partir d'un seul appui sur le bouton 28 choisi, par exemple un cappuccino ou un café latté.

En fonctionnement, par exemple lorsque l'utilisateur veut réaliser une préparation à base de lait et de café, notamment un cappuccino, celui-ci verse du lait dans un récipient 100, tel qu'une tasse ou un mug, et le positionne sur la coupelle 8 du repose-récipient 6 pour que l'ouverture supérieure 102 du récipient 100 soit placée sous la tête 7, en-dessous de l'outil rotatif 31 et de la buse 46. L'utilisateur déplace ensuite simultanément la tête 7 et le repose-récipient 6 dans la position rapprochée de travail pour amener l'outil rotatif 13 à proximité du fond 101 du récipient 100, plongé dans le lait, en manipulant soit le corps 16 de la tête 7 soit la platine 12 du repose-récipient 6. Une fois le point bas atteint, en position de travail, l'utilisateur sélectionne le programme de préparation du cappuccino en appuyant sur le bouton 28 correspondant. La carte de commande électronique actionne le moteur 32 pour faire tourner l'outil rotatif 31 et commande la chaudière pour produire de la vapeur qui va arriver dans le lait placé dans le récipient 100, par le conduit 29. Ainsi, le lait va être chauffé et moussé. Après un temps prédéterminé, la carte électronique de commande stoppe le moteur 32 et l'arrivée de vapeur puis commande la réalisation d'un café qui va s'écouler dans le récipient 100 par la buse 46 de distribution de café. Une fois la préparation terminée, l'utilisateur déplace simultanément la tête 7 et le repose-récipient 6 dans la position éloignée en manipulant soit le corps 16 de la tête 7 soit la platine 12 du repose-récipient 6. Une fois l'outil rotatif 31 dégagé du récipient 100, le conduit 29 et l'outil rotatif 31 peuvent être retirés en déboitant la portion d'extrémité supérieure 44 du conduit 29, de la portion d'extrémité inférieure 45 du tronçon inférieur creux 36, ce qui permet ensuite de les nettoyer, par exemple en les plaçant dans un lave-vaisselle.

La description qui précède décrit quatre conceptions de la tête 7, la première comportant un conduit 29 équipé d'un outil rotatif 31, la seconde comportant une buse 46 de distribution de café et les troisième et quatrième combinant les deux premières conceptions. Il est aussi possible de prévoir sur la tête 7 une buse de distribution de boisson lactée, en complément ou en substitution de la buse 46 de distribution de café. Bien entendu, d'autres conceptions de la tête 7 restent possibles dans le cadre de l'invention.

Des variantes de conception sont également envisageables pour le dispositif 9 de liaison du déplacement de la tête 7 et du repose-récipient 6 qui permet une mobilité conjointe de la tête 7 et du repose-récipient 6 visant à les déplacer simultanément en sens opposés entre la position éloignée d'attente et la position rapprochée de travail. Il est notamment possible de concevoir des variantes de liaison glissière permettant de translater en hauteur, de préférence verticalement, la tête 7 et le repose-récipient 6. Par exemple, les deux colonnes 10, 11 recevant à coulissement les premier et second coulisseaux 13, 17 peuvent être remplacées par une seule colonne (non illustrée) qui présente soit une section rectangulaire ou carrée soit une section cylindrique, une butée (non illustrée) étant prévue dans ce deuxième cas pour bloquer la rotation des premier et second coulisseaux 13, 17 autour de ladite seule colonne. Il est aussi possible de prévoir une rainure de guidage (non illustrée) des premier et second coulisseaux 13, 17 pour les translater verticalement.

## Revendications

1. Machine (1) de préparation et/ou de distribution d'aliments liquides ou pâteux comportant un bâti (2), une tête (7) mobile par rapport au bâti (2) et un repose-récipient (6) mobile par rapport au bâti (2), ledit repose-récipient (6) étant agencé sous la tête (7) et étant destiné à recevoir un récipient (100) de réception de l'aliment, **caractérisée en ce qu'**elle comporte un dispositif (9) de liaison du déplacement de la tête (7) et du repose-récipient (6), la tête (7) et le repose-récipient (6) étant mobiles conjointement dans des sens opposés entre une position éloignée d'attente et une position rapprochée de travail.

2. Machine (1) selon la revendication 1, **caractérisée en ce que** la tête (7) et le repose-récipient (6) sont mobiles par rapport au bâti (2) en translation le long d'un axe vertical (X1, X5).

3. Machine (1) selon la revendication 2, **caractérisée en ce que** la tête (7) et le repose-récipient (6) se déplacent sur au moins une colonne (10, 11) commune.

4. Machine (1) selon l'une quelconque des revendications 2 à 3, **caractérisée en ce que** le dispositif (9) de liaison du déplacement de la tête (7) et du repose-récipient (6) comporte une première crémaillère (19) assujettie au repose-récipient (6), une deuxième crémaillère (20) assujettie à la tête (7) et un pignon (23) mobile autour d'un axe de rotation (X4) vis-à-vis du bâti (2), ledit pignon (23) coopérant avec les première et deuxième crémaillères (19, 20) de telle façon que celles-ci sont réglables verticalement en sens opposé l'une par rapport à l'autre.

5. Machine (1) selon la revendication 4, **caractérisée en ce que** le dispositif (9) de liaison du déplacement de la tête (7) et du repose-récipient (6) comporte un moteur d'entrainement du pignon (23).

6. Machine (1) selon l'une quelconque des revendications 1 à 5, **caractérisée en ce que** la tête (7) comporte un système de traitement de l'aliment et/ou un système de distribution de l'aliment.

7. Machine (1) selon la revendication 6, **caractérisée en ce que** le système de traitement comporte un outil rotatif (31) destiné à agiter une préparation contenue dans le récipient (100) et /ou un conduit (29) d'amenée d'eau chaude et/ou de vapeur destiné à être positionné dans l'aliment en position rapprochée de travail, ladite machine (1) comportant un générateur d'eau chaude et/ou de vapeur pour alimenter le conduit (29) d'amenée d'eau chaude et/ou de vapeur.

8. Machine (1) selon la revendication 7, **caractérisée en ce que** le conduit (29) d'acheminement d'eau chaude et/ou de vapeur est rotatif, l'outil rotatif (31) étant agencé à proximité d'une extrémité libre (30) dudit conduit (29).

9. Machine (1) selon l'une quelconque des revendications 6 à 8, **caractérisée en ce que** le système de traitement comporte un point bas, ledit point bas étant agencé par rapport au repose-récipient (6), en position rapprochée de travail, à une distance D1 inférieure ou égale à cinq millimètres (D1≤5mm).

10. Machine (1) selon l'une quelconque des revendications 6 à 9, **caractérisée en ce que** le système de distribution de l'aliment comporte au moins une buse (46) de distribution, notamment de café et/ou de lait, qui comporte une extrémité libre (49), ladite extrémité libre (49) étant agencée au niveau d'un bord supérieur (103) du récipient (100) en position rapprochée de travail.

## Patentansprüche

1. Maschine (1) zur Zubereitung und/oder Abgabe flüssiger oder pastöser Nahrungsmittel, die ein Gestell (2), einen Kopf (7), der in Bezug auf das Gestell (2) beweglich ist, und eine Behälterauflage (6), die in Bezug auf das Gestell (2) beweglich ist, umfasst, wobei die Behälterauflage (6) unter dem Kopf (7) eingerichtet und dazu bestimmt ist, einen Behälter (100) zur Aufnahme des Nahrungsmittels aufzunehmen, **dadurch gekennzeichnet, dass** sie eine Verbindungs- und Verlagerungsvorrichtung (9) des Kopfes (7) und der Behälterauflage (6) umfasst, wobei der Kopf (7) und die Behälterauflage (6) gemeinsamen in entgegengesetzte Richtungen zwischen einer entfernten Warteposition und einer angenäherten Arbeitsposition beweglich sind.

2. Maschine (1) nach Anspruch 1, **dadurch gekennzeichnet, dass** der Kopf (7) und die Behälterauflage (6) in Bezug auf das Gestell (2) in Verschiebung entlang einer vertikalen Achse (X1, X5) beweglich sind.

3. Maschine (1) nach Anspruch 2, **dadurch gekennzeichnet, dass** sich der Kopf (7) und die Behälterablage (6) auf mindestens einer gemeinsamen Säule (10, 11) verlagern.

4. Maschine (1) nach einem der Ansprüche 2 bis 3, **dadurch gekennzeichnet, dass** die Verbindungsvorrichtung (9) der Verlagerung des Kopfes (7) und der Behälterablage (6) eine erste Zahnstange (19) umfasst, die an die Behälterauflage (6) gebunden ist, eine zweite Zahnstange (20), die an den Kopf (7) gebunden ist, und ein Ritzel (23), das um eine Drehachse (X4) gegenüber dem Gestell (2) beweglich ist, wobei das Ritzel (23) mit der ersten und der zweiten Zahnstange (19, 20) derart zusammenwirkt, dass sie vertikal in entgegengesetzter Richtung zueinander einstellbar sind.

5. Maschine (1) nach Anspruch 4, **dadurch gekennzeichnet, dass** die Verbindungsvorrichtung (9) der Verlagerung des Kopfes (7) und der Behälterablage (6) einen Antriebsmotor des Ritzels (23) umfasst.

6. Maschine (1) nach einem der Ansprüche 1 bis 5, **dadurch gekennzeichnet, dass** der Kopf (7) ein Behandlungssystem des Nahrungsmittels und/oder ein Abgabesystem des Nahrungsmittels umfasst.

7. Maschine (1) nach Anspruch 6, **dadurch gekennzeichnet, dass** das Behandlungssystem ein Drehwerkzeug (31) umfasst, das dazu bestimmt ist, eine Zubereitung, die in dem Behälter (100) enthalten ist, zu rühren, und/oder eine Warmwasser- und/oder Dampfzuführleitung (29), die dazu bestimmt ist, in dem Nahrungsmittel in angenäherter Arbeitsposition positioniert zu sein, wobei die Maschine (1) einen Warmwasser- und/oder Dampferzeuger umfasst, um die Warmwasser- und/oder Dampfzuführleitung (29) zu versorgen.

8. Maschine (1) nach Anspruch 7, **dadurch gekennzeichnet, dass** die Warmwasser- und/oder Dampfzuführleitung (29) drehend ist, wobei das Drehwerkzeug (31) in der Nähe eines freien Endes (30) der Leitung (29) eingerichtet ist.

9. Maschine (1) nach einem der Ansprüche 6 bis 8, **dadurch gekennzeichnet, dass** das Behandlungssystem einen Tiefpunkt umfasst, wobei der Tiefpunkt in Bezug auf die Behälterauflage (6) in angenäherter Arbeitsposition in einem Abstand D1, der kleiner oder gleich fünf Millimeter (D1<5 mm) ist, eingerichtet ist.

10. Maschine (1) nach einem der Ansprüche 6 bis 9, **dadurch gekennzeichnet, dass** das Abgabesystem des Nahrungsmittels mindestens eine Abgabedüse (46), insbesondere von Kaffee und/oder Milch, umfasst, die ein freies Ende (49) umfasst, wobei das freie Ende (49) in angenäherter Arbeitsposition auf der Ebene eines oberen Randes (103) des Behälters (100) eingerichtet ist.

## Claims

1. Machine (1) for preparing and/or distributing liquid or pasty foodstuffs comprising a frame (2), a mobile head (7) with respect to the frame (2) and a mobile container shelf (6) with respect to the frame (2), said container shelf (6) being arranged under the head (7) and being intended to receive a container (100) for receiving the foodstuff, **characterised in that** it comprises a device (9) for connecting the movement of the head (7) and of the container shelf (6), the head (7) and the container shelf (6) both being mobile in opposite directions between an extended waiting position and a close working position.

2. Machine (1) according to claim 1, **characterised in that** the head (7) and the container shelf (6) are mobile with respect to the frame (2) in translation along a vertical axis (X1, X5).

3. Machine (1) according to claim 2, **characterised in that** the head (7) and the container shelf (6) are moved over at least one shared column (10, 11).

4. Machine (1) according to any one of claims 2 to 3, **characterised in that** the device (9) for connecting the movement of the head (7) and of the container shelf (6) comprises a first rack (19) subservient to the container shelf (6), a second rack (20) subservient to the head (7) and a pinion (23) which is mobile about an axis of rotation (X4) vis-à-vis the frame (2), said pinion (23) engaging with the first and second racks (19, 20) such that these are vertically adjusted in the opposite direction against one another.

5. Machine (1) according to claim 4, **characterised in that** the device (9) for connecting the movement of the head (7) and of the container shelf (6) comprises a pinion (23) drive motor.

6. Machine (1) according to any one of claims 1 to 5, **characterised in that** the head (7) comprises a system for processing the foodstuff and/or a system for distributing the foodstuff.

7. Machine (1) according to claim 6, **characterised in that** the processing system comprises a rotary tool (31) intended to stir a preparation contained in the container (100) and/or a conduit (29) for supplying hot water and/or steam intended to be positioned in the foodstuff in the close working position, said machine (1) comprising a hot water and/or steam generator to supply the conduit (29) for supplying hot water and/or steam.

8. Machine (1) according to claim 7, **characterised in that** the conduit (29) for conveying hot water and/or steam is rotary, the rotary tool (31) being arranged in the proximity of a free end (30) of said conduit (29).

9. Machine (1) according to any one of claims 6 to 8, **characterised in that** the processing system comprises a bottom point, said bottom point being arranged with respect to the container shelf (6), in the close working position, at a distance D1 less than or equal to five millimetres (D1<5mm).

10. Machine (1) according to any one of claims 6 to 9, **characterised in that** the system for distributing the foodstuff comprises at least one nozzle (46) for distributing, in particular, coffee and/or milk, which comprises a free end (49), said free end (49) being arranged at an upper edge (103) of the container (100) in the close working position.
